# EUROPEAN PATENT APPLICATION

(11) **EP 4 765 060 A2**
(43) Date of publication of application: **24.06.2026**
(21) Application number: 25218738.0
(22) Date of filing: 26.11.2025
(51) Int. Cl.: G08B 13/196, G08B 17/12, G08B 29/18

(54) **GENERATING AN EVENT ANALYSIS**

(30) Priority: 17.12.2024 US 202418984110
(71) Applicant: Honeywell International Inc., Charlotte, NC 28202 (US)
(72) Inventor: S B, Mahadevan, Charlotte, 28202 (US); NALUKURTHY, RajeshBabu, Charlotte, 28202 (US); PRASAD, Vedaprakash Mysore Sachidananda, Charlotte, 28202 (US); RAJ, Nishant, Charlotte, 28202 (US)
(74) Representative: Haseltine Lake Kempner LLP

(57) **Abstract**

Devices, systems, and methods for generating an event analysis are described herein. In some examples, one or more embodiments include a memory and a processor to execute instructions stored in the memory to receive information about an event in an area of a facility from an event detection system in the facility, receive a video stream from a camera in the area of the facility, generate an event analysis for the area of the facility based on the received information from the event detection system and the video stream, and transmit the event analysis to a mobile device located remotely from the computing device.

## Description

### Technical Field

The present disclosure relates to devices, systems, and methods for generating an event analysis.

### Background

Facilities, such as commercial facilities, office buildings, hospitals, campuses (e.g., including buildings and outdoor spaces), and the like, may have an event detection system that can be triggered during an event, such as an emergency situation (e.g., a fire) to warn occupants to evacuate. Such an event detection system may include an alarm system having a control panel and a number of event devices (e.g., sensors, sounders, pull stations, etc.) located throughout the facility (e.g., on different floors and/or in different rooms of the facility) that can perform an action when an event (e.g., a hazard event, a fault event, etc.) is occurring in the facility. In an example of an event, the number of event devices may provide a notification of the event to the occupants of the facility via alarms and/or other mechanisms.

### Brief Description of the Drawings

Figure 1 is an example of a system for generating an event analysis, in accordance with one or more embodiments of the disclosure.
Figure 2 illustrates an example of a facility having an emergency event, in accordance with one or more embodiments of the disclosure.
Figure 3 illustrates an example of an emergency event analysis, in accordance with one or more embodiments of the disclosure.
Figure 4 is an example of a computing device for an emergency event analysis, in accordance with one or more embodiments of the disclosure.

### Detailed Description

Devices, systems, and methods for generating an event analysis are described herein. In some examples, one or more embodiments include a memory and a processor to execute instructions stored in the memory to receive information about an event in an area of a facility from an event detection system in the facility, receive a video stream from a camera in the area of the facility, generate an event analysis for the area of the facility based on the received information from the event detection system and the video stream, and transmit the event analysis to a mobile device located remotely from the computing device.

A facility can utilize an event detection system in order to warn occupants of the facility of an emergency event, such as a fire. An event detection system can be a system of devices that operate to collect information about a facility and provide the collected information for analysis. Such an event detection system can also take actions based on the collected information, such as providing an audible and/or visible warning in an emergency event. For example, the event detection system can utilize event devices to warn occupants of an emergency event occurring in a space, such as a fire. As used herein, the term "event device" refers to a device that can receive an input relating to an event and/or generate an output relating to an event. Such event devices can be a part of the event detection system of a space in a facility/in the facility at large and can include devices such as fire devices including fire sensors, smoke detectors, heat detectors, carbon monoxide (CO) detectors, or combinations of these; fire control panels; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of event devices. Such event devices may also include self-test capabilities.

First responders can face challenges when entering a facility having an active event. For example, during a fire event, first responders may have limited visibility due to smoke and/or fire. Utilizing a facility's camera system, such as a closed-circuit television (CCTV) system, may not provide these first responders with information either, as the cameras in the CCTV system may also be blocked by smoke and/or fire.

In some instances, an emergency event may additionally and/or alternatively cause blockages in routes through the facility. For example, blockages which may be caused by debris caused by the event may present as obstacles to a first responder entering the facility. These blockages can restrict the movements of first responders and can be dangerous to first responders. Further, the restricted movements caused by debris in the facility may delay or prevent first responders from entering areas of the facility in which other occupants are located who may be trapped, injured, and/or incapacitated. Due to smoke and/or fire, such obstacles may also not be visible by a CCTV system in the facility.

Because of the limited visibility and lack of real-time situational awareness presented by fire and/or smoke blocking views of an event, a first responder's risk to personal safety can go up. For example, without such information, it can be difficult for a first responder to assess the severity, heat distribution, and progression of a fire or other emergency event. Additionally, it can make it harder to locate victims, identify access and/or escape routes, and delay response efforts.

Generating an event analysis, according to the disclosure, can allow for the use of an event analysis to identify objects of interest in a facility and contextual information about an emergency event occurring that can assist a first responder in efficiently responding to the emergency event. The event analysis can include identified objects of interest, such as blockages of ingress/egress routes, a presence of fire in the area, temperature information, and/or whether a human such as an occupant of the facility is located in the area. The event analysis can utilize thermal imaging capabilities of a CCTV camera to identify objects of interest, allowing for object identification even in the presence of smoke or fire that would otherwise obscure a normal CCTV camera. Accordingly, generating an event analysis according to the disclosure can allow a first responder to more easily assess an emergency event, make it easier to locate victims, and/or identify ingress/egress routes while lowering the personal risk to the first responder, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

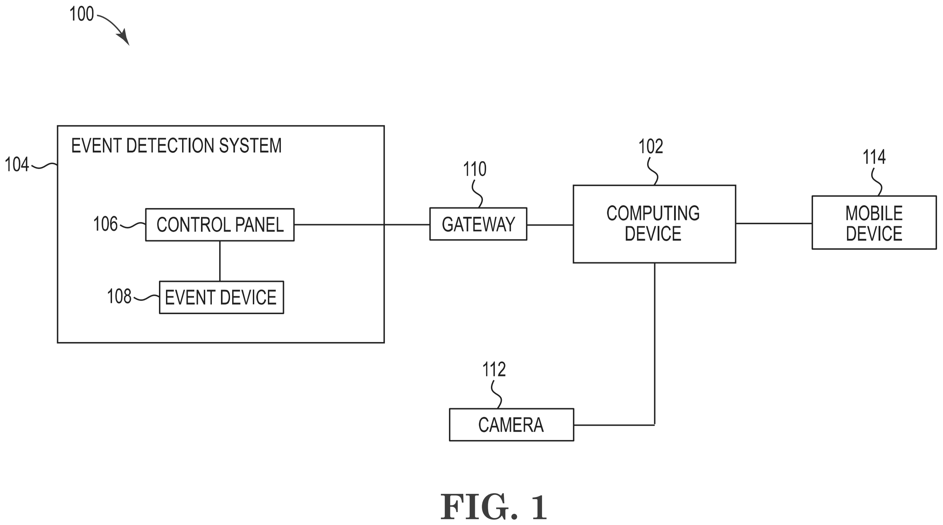

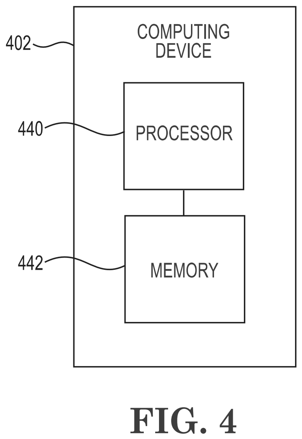

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 402 in Figure 4.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for generating an event analysis, in accordance with one or more embodiments of the disclosure. The system 100 can include a computing device 102, an event detection system 104, a gateway 110, a camera 112, and a mobile device 114. The event detection system 104 can include a control panel 106 and an event device 108.

As mentioned above, the system 100 can be included in a facility, a space in a facility, etc. The system 100 can include a device/series of devices in order to detect events and/or process and/or analyze the detected events to determine whether to generate an alarm for occupants of the facility.

For example, the system 100 can include an event device 108. The event device 108 can be a device to detect an event and transmit the detected event for processing and/or analysis. As mentioned above, the event device 108 can be, for example, a camera, motion sensors, fire devices including fire sensors, smoke detectors, heat detectors, carbon monoxide (CO) detectors, or combinations of these; fire control panels; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of event devices. Additionally, event device 108 may also include self-test capabilities.

Although a single event device 108 is illustrated in Figure 1, embodiments are not so limited. For example, the system 100 can include multiple event devices 108.

The system 100 can further include a control panel 106 as part of the event detection system 104. The control panel 106 can be utilized to control the event device 108 included in the system 100.

The control panel 106 can be connected to the event device 108, transmit a plurality of commands to the event device 108, and/or provide power to the event device 108. The control panel 106 can apply a voltage to an event device loop in order to power event devices on the event device loop. Such power can allow the event device 108 to perform actions, such as communication between event device 108 and the control panel 106, self-test procedures, and/or provide an audible and/or visible warning in an event, among other actions.

The control panel 106 may be further connected to the computing device 102 via a gateway 110. The gateway 110 can be a device (e.g., a building system gateway) that provides a communication link between the control panel 106 and other devices, such as the computing device 102. For example, the gateway 110 may enable transmission of data (e.g., system device data, activation signals, etc.) from the control panel 106 to the computing device 102 and vice versa. Communication between the control panel 106 and the computing device 102 is further described herein.

As mentioned above, the system 100 can be utilized to generate an event analysis. The event analysis can be utilized to identify objects of interest in the system 100 and can include contextual information. In an emergency event or a maintenance mode, the event analysis can assist a user in addressing the emergency event or maintenance activity, as is further described herein.

In order to generate an event analysis, the computing device 102 can receive information about an event in an area of a facility. The computing device 102 can be, for example, remotely located from the facility and can be included as part of a cloud computing environment. The event detection system 104 can transmit information about an event in the facility to the computing device 102 via the gateway 110. Further, the camera 112 can transmit information about an event to the computing device 102. Such information is further described herein.

In an example in which the information pertains to an emergency event, the computing device 102 can receive information that includes alarm information from the control panel 106 for an emergency event in an area of the facility while the event detection system 104 is in an emergency mode. For example, the event device 108 can be a smoke detector and detect smoke in an area (e.g., a conference room). The smoke can be a result of an emergency event (e.g., such as a fire).

In such an example, the system 100 can include the camera 112. The camera 112 can be part of a CCTV system included in the facility. The camera 112 can include a field of view of the area of the facility, and can capture information in the field of view and transmit that information to the computing device 102 as a video stream. The computing device 102 can, as a result, receive the video stream of the area of the facility having the event from the camera 112.

For example, the camera 112 can be operating in a normal operating mode of the camera. In the normal operating mode of the camera 112, the camera 112 can capture information by recording wavelengths in the visible light spectrum. The camera 112 can transmit the captured information, such as in a video stream format, to the computing device 102.

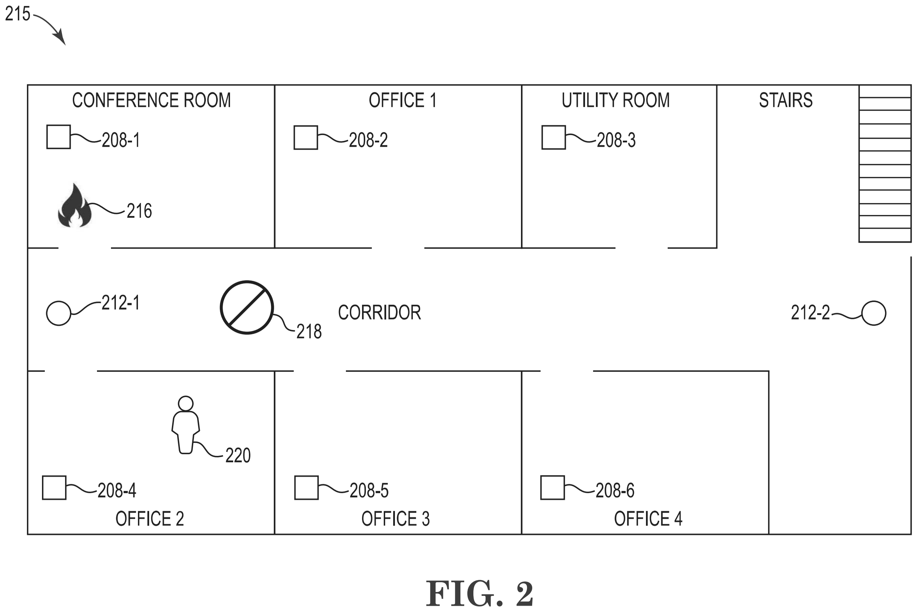

Additionally, the camera 112 can operate in a thermal imaging operating mode. In the thermal imaging operating mode of the camera 112, the camera 112 can capture information by detecting and visualizing thermal energy emitted by objects in the field of view of the camera 112 in the non-visible light spectrum. The camera 112 can switch between the normal operating mode and the thermal imaging operating mode based on whether the field of view of the camera 112 is blocked, as is further described in connection with Figure 2.

The computing device 102 can generate an event analysis for the area of the facility based on the received information from the event detection system 104 and the video stream from the camera 112. The event analysis can inform a user, such as a first responder, about the event that is occurring to allow the user to easily assess the event. For example, the event analysis can allow a user to assist a user in safely responding to an emergency event and/or allow a user to efficiently respond to a maintenance event, as is further described herein.

As mentioned above, in some examples, the event can be an emergency event. The event analysis can be an emergency event analysis. The emergency event analysis can include objects of interest in the area of the emergency event and/or contextual information about the emergency event, as is further described herein.

As mentioned above, the computing device 102 can receive alarm information for a detected emergency event. The alarm information can include, for instance, a location in the facility and type of the event device 108 that detected the event, sensor information about the detected event (e.g., a detected heat level as compared to a threshold alarm level, etc.), the time the detection occurred, among other examples of alarm information.

The computing device 102 can utilize the alarm information and the video stream to generate the emergency event analysis. For example, the computing device 102 can utilize an artificial intelligence (AI) model to identify objects of interest in the area of the facility where the emergency event was detected and to determine contextual information about the emergency event. The Al model can be a classification model and can utilize a predetermined training data set to receive the alarm information and the video stream as inputs, analyze the alarm information and the video stream, and generate objects of interest in the area and contextual information as the output from the Al model.

In some examples, the Al model can be a generative Al model configured to process inputs to generate an output. For example, the Al model can be a machine learning model that can generate an event analysis utilizing the alarm information and video stream as inputs.

The Al model can be, for instance, an artificial neural network (ANN). Artificial neural networks (ANNs) are networks that can process information by modeling a network of neurons. The network of neurons can be modeled in such a way so as to process information. For example, ANNs can include a multiple neuron topology, which can be referred to as artificial neurons or units. An ANN operation refers to an operation that processes inputs using units to perform a given task.

The ANN operation may involve applying various machine learning algorithms to process inputs. For example, the ANN can perform machine learning tasks by performing a weighted combination of inputs (either from a network input or a previous layer) at each unit to generate an output. The probability weight associations can be provided by a plurality of units that comprise the ANN. The units together with weights, biases, embeddings, and/or activation functions can be used to generate an output of the ANN based on the input to the ANN. Units of the ANN can be grouped to form layers of the ANN. The ANN can implement or represent an algorithm consisting of a series of connected layers that process signals based on outputs from other ones of the series of connected layers.

While the Al model is described above as being an ANN, embodiments are not so limited. For example, the Al model can be any other type of machine learning model.

In order for a user to be able to utilize the event analysis, the computing device 102 can generate the event analysis in a user readable format. For example, the event analysis can include an image of the area including identified objects of interest, a video stream of the area from the camera 112 including the objects of interest, and/or contextual information to supplement the images/video stream. Objects of interest in the area can include whether an occupant (e.g., a human, an animal, etc.) is in the area of the emergency event, whether a blockage of an ingress/egress route for the area exists, and/or whether there is a presence of fire in the area, as is further described herein.

The computing device 102 can determine, using the Al model, whether there is an occupant in the area of the emergency event. For example, the computing device can determine that there is a human in the conference room in which the fire was detected, a status of the human in the area (e.g., whether they are mobile, trapped, injured, and/or otherwise incapacitated), a body temperature of the human (e.g., via the thermal imaging operating mode of the camera 112), among other types of objects of interest associated with an occupant.

Additionally, the objects of interest can include whether a blockage of an ingress/egress route for the area exists. For example, a blockage can be object(s) that obstructs the path of a person who is attempting to traverse an ingress and/or egress route to the area having the event, where in the absence of the object(s) the ingress and/or egress route to the area would not otherwise obstruct the path of the person. The blockage may be, for example, debris which obstructs an ingress/egress route caused by the event and/or object(s) which obstructed the ingress/egress route prior to the emergency event. For instance, in the case of the fire, ceiling panels or other structural debris may have fallen that obstruct a corridor to the conference room in which the fire was detected.

Further, the objects of interest can include whether the presence of fire is captured by the camera 112. For example, the camera 112 may capture in the field of view the fire causing the emergency event (e.g., whether in a normal operating mode and/or in a thermal imaging operating mode).

Moreover, the objects of interest can include temperature information for the area. For example, while the camera 112 is operating in the thermal imaging mode, the camera 112 can provide video stream information to the computing device 102 allowing the computing device 102 to determine temperature information in the area, such as hot spots, cool spots, and temperature sensor data.

The emergency event analysis can further include contextual information about the emergency event. The contextual information can further provide insights on the circumstances of the emergency event.

For example, the contextual information can include zonal information about the area of the facility. Zonal information can include information that describes the location of the zone in the facility in which the emergency event is occurring. For instance, zonal information can include the area name (e.g., conference room, second floor) in the facility in which the emergency event was detected.

Additionally, contextual information can include location information for the camera 112. For instance, the location of the camera 112 can be a corridor adjacent to the conference room in which the emergency event was detected.

Further, contextual information can include a status of identified objects of interest. For example, the contextual information can include information about occupants in the area in which the emergency event was detected (e.g., a status of the occupant, body temperature, severity of any blockages, type of object causing blockage, etc.)

Once the event analysis is generated, the computing device 102 can transmit the event analysis to a mobile device 114. As used herein, a mobile device can include devices that are (or can be) carried and/or worn by a user. For example, a mobile device can be a phone (e.g., a smart phone), a tablet, a personal digital assistant (PDA), smart glasses, and/or a wrist-worn device (e.g., a smart watch), among other types of mobile devices.

For example, the computing device 102 can transmit the emergency event analysis to the mobile device 114, where the mobile device 114 is remotely located from the computing device 102. The mobile device 114 can be, for example, a device utilized by a first responder. The mobile device 114 can allow a first responder to view the emergency event analysis, including identified objects of interest and contextual information, in order to allow the first responder to easily assess the emergency event, locate potential trapped occupants/victims, identify ingress/egress routes, and lower the personal risk of the first responder when responding to the emergency event.

As mentioned above, in some examples, the received information by the computing device 102 can be information about a blockage of an ingress and/or egress route for an area of the facility while the event detection system is in a maintenance mode. For example, while the event device 108 has not detected any events, the computing device 102 can receive information about a blockage of an ingress/egress route (e.g., from the video stream of the camera 112).

The computing device 102 can generate a maintenance event analysis for the blockage based on the video stream from the camera 112. For example, the computing device 102 can utilize an Al model to analyze the video stream and determine the blockage exists, a type of blockage, and/or the location of the blockage, included in the maintenance event analysis. The computing device 102 can further transmit the maintenance event analysis to the mobile device 114. For instance, in some examples the mobile device 114 can be the mobile device of a building engineer for the facility, maintenance personnel of the facility, etc. The user can, using the maintenance event analysis, locate the blockage and remove the blockage.

Figure 2 illustrates an example of a facility 215 having an emergency event, in accordance with one or more embodiments of the disclosure. The facility 215 can include various areas including stairs, a corridor, a conference room, utility room, and offices 1-4. The facility 215 can further include event devices 208-1, 208-2, 208-3, 208-4, 208-5, and 208-6 and cameras 212-1 and 212-2. Although not illustrated in Figure 2, the event devices 208-1, 208-2, 208-3, 208-4, 208-5, and 208-6 and cameras 212-1 and 212-2 can be connected to a computing device (e.g., a remote computing device) and can transmit information to the computing device so that the computing device can generate an event analysis, as is further described herein.

As illustrated in Figure 2, the event device 208-1 can detect a fire 216 (e.g., an emergency event). For example, the event device 208-1 can be a smoke detector that detects smoke generated by the fire 216. The event device 208-1 can accordingly generate alarm information and transmit the alarm information to the computing device via a control panel and gateway (e.g., not illustrated in Figure 2), and the computing device can receive the alarm information.

As illustrated in Figure 2, the camera 212-1 can be located in the area in which the fire 216 was detected. For example, the area can be a portion of the facility 215 including the conference room, office 1, a portion of the corridor, office 2, and office 3. The camera 212-1 may have a field of view that can include a portion of the conference room in which the event device 208-1 detected the fire 216.

The camera 212-1 can determine whether a field of view of the area captured by the camera 212-1 is blocked. In an instance in which the field of view of the camera 212-1 is not blocked, the camera 212-1 can transmit, by the camera 212-1 in a normal operating mode of the camera, the video stream in a default format from the camera 212-1 to the computing device. As mentioned above, in the normal operating mode of the camera 212-1, the camera 212-1 can capture information by recording wavelengths in the visible light spectrum.

However, in some examples, smoke generated by the fire 216 may obscure the field of view of the camera 212-1. In response to the field of view of the camera 212-1 being blocked, the camera can change the operating mode of the camera from the normal operating mode to a thermal imaging operating mode. In the thermal imaging operating mode, the camera 212-1 can capture information by detecting and visualizing thermal energy emitted by objects in the field of view of the camera 212-1 in the non-visible light spectrum (e.g., infrared). Accordingly, the camera 212-1 can transmit, by the camera 212-1 in the thermal imaging operating mode, the video stream to the computing device in a thermal imaging format in response to the field of view being blocked.

In order to receive the video stream, the computing device can determine the camera 212-1 from a plurality of cameras 212-1, 212-2 in the facility. For example, utilizing the Al model, the computing device can determine camera 212-1 is located in the area in which the event device 208-1 detected the fire 216. The computing device can further transmit a request to the camera 212-1 to receive the video stream, and the camera 212-1 can transmit the video stream from the camera to the computing device in the particular format (e.g., normal and/or thermal imaging) responsive to the request from the computing device.

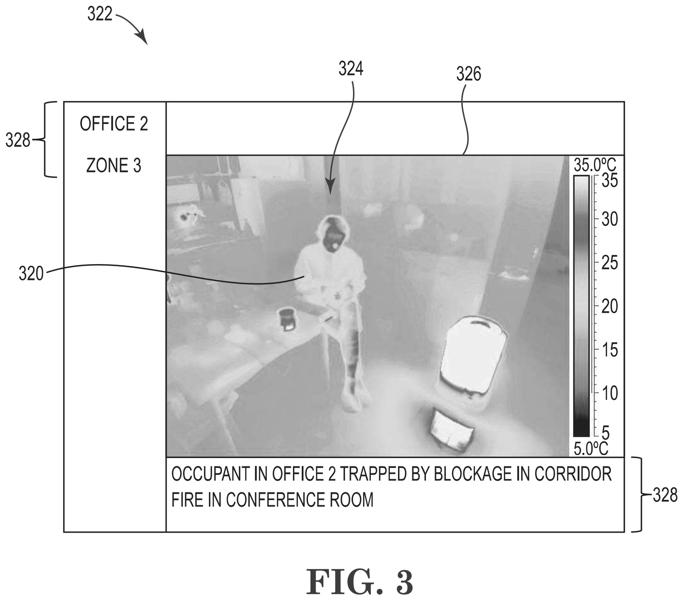

As previously described above, the computing device can receive the alarm information about the emergency event and the video stream from the camera 212-1. Accordingly, the computing device can generate the emergency event analysis for the area based on the alarm information from the control panel and the video stream from the camera. The emergency event analysis can include identified objects of interest and contextual information about the emergency event, as is further described in connection with Figure 3.

Figure 3 illustrates an example of an emergency event analysis 322, in accordance with one or more embodiments of the disclosure. The emergency event analysis 322 can include objects of interest 324 and contextual information 328, as is further described herein.

The emergency event analysis 322 can include an image of the area including the objects of interest 324. For example, the event can be a fire detected by a smoke detector included in a conference room. The emergency event analysis can include an image of the conference room provided by a camera included in the area of the facility having the conference room.

In some examples, the emergency event analysis can include a video stream of the area from the camera including the objects of interest 324. For example, the camera can provide a video stream in the emergency event analysis that includes recorded and/or real-time video of the area from the camera.

As previously described above, the image of the area and/or the video stream can include a field of view 326 of the area of the facility capture by the camera. As illustrated in Figure 3, the field of view 326 can be captured by the camera in the thermal imaging mode of the camera. For instance, the field of view 326 can show objects of interest in a thermal imaging format. The field of view 326 in the thermal imaging format can be especially useful for a user if the field of view 326 of the camera is otherwise obscured/blocked (e.g., by smoke generated from the fire).

As illustrated in Figure 3, the objects of interest 324 can include an occupant 320, a location of the occupant 320 in the area, a status of the occupant 320, a body temperature of the occupant 320, and temperature information in the area. For example, the occupant 320 can appear to be mobile but trapped in the office adjacent to the conference room in which the fire was detected, and can include a thermal hot spot in the field of view which may be a fire. Additionally, the body temperature of the occupant 320 can be provided, allowing for first responders to prepare for particular times of injuries (e.g., burns) which may be suffered by the occupant 320.

Additionally, while the objects of interest 324 are included in a visual form in the emergency event analysis, the emergency event analysis can further include contextual information about the emergency event. The contextual information may include textual information further supplementing the objects of interest 324.

For example, the contextual information 328 can include zonal information about the area of the facility. For example, the field of view 326 is associated with Office 2, Zone 3 of the facility. Additionally, the contextual information 328 can include a status of identified objects of interest 324. For example, the occupant 320 is trapped in office 2 as a result of a blockage of the corridor, a fire is occurring in the conference room, etc.

Accordingly, generating an event analysis, according to the disclosure, can allow for the use of an event analysis to identify objects of interest in a facility and contextual information about an emergency event occurring that can assist a first responder in efficiently responding to the emergency event. The event analysis can include identified objects of interest, such as blockages of ingress/egress routes, a presence of fire in the area, temperature information, and/or whether a human such as an occupant of the facility is located in the area, as well as contextual information to further supplement the identified objects of interest to allow a first responder to more easily assess an emergency event, make it easier to locate victims, and/or identify ingress/egress routes while lowering the personal risk to the first responder, as compared with previous approaches.

Figure 4 is an example of a computing device 402 for generating an event analysis, in accordance with one or more embodiments of the disclosure. As illustrated in Figure 4, the computing device 402 can include a memory 442 and a processor 440 for generating an event analysis, in accordance with the present disclosure.

The memory 442 can be any type of storage medium that can be accessed by the processor 440 to perform various examples of the present disclosure. For example, the memory 442 can be a non-transitory computer readable medium having computer readable instructions (e.g., executable instructions/computer program instructions) stored thereon that are executable by the processor 440 for generating an event analysis in accordance with the present disclosure.

The memory 442 can be volatile or nonvolatile memory. The memory 442 can also be removable (e.g., portable) memory, or non-removable (e.g., internal) memory. For example, the memory 442 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 442 is illustrated as being located within computing device 402, embodiments of the present disclosure are not so limited. For example, memory 442 can also be located internal to another computing resource (e.g., enabling computer readable instructions to be downloaded over the Internet or another wired or wireless connection).

The processor 440 may be a central processing unit (CPU), a semiconductor-based microprocessor, and/or other hardware devices suitable for retrieval and execution of machine-readable instructions stored in the memory 442.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (102, 402), comprising:
a memory (442); and
a processor (440) configured to execute executable instructions stored in the memory (442) to:
receive information about an event in an area of a facility from an event detection system (104) in the facility;
receive a video stream from a camera (112, 212) in the area of the facility;
generate an event analysis for the area of the facility based on the received information from the event detection system (104) and the video stream; and
transmit the event analysis to a mobile device (114) located remotely from the computing device (102, 402).

2. The computing device (102, 402) of claim 1, wherein the received information includes alarm information from a control panel (106) of the event detection system (104) for an emergency event in the area of the facility while the event detection system (104) is in an emergency mode.

3. The computing device (102, 402) of claim 2, wherein generating the event analysis includes generating an emergency event analysis for the area in the facility based on the alarm information.

4. The computing device (102, 402) of claim 3, wherein the processor (440) is configured to generate the emergency event analysis by identifying, via an artificial intelligence (AI) model based on the video stream, objects of interest in the area.

5. The computing device (102, 402) of claim 4, wherein the objects of interest include at least one of:
a human in the area;
a blockage of an ingress and/or egress route for the area; and
a presence of fire in the area.

6. The computing device (102, 402) of claim 3, wherein the processor (440) is configured to transmit the emergency event analysis to the mobile device (114).

7. The computing device (102, 402) of claim 1, wherein the received information includes information about a blockage of an ingress and/or egress route for the area of the facility while the event detection system (104) is in a maintenance mode.

8. The computing device (102, 402) of claim 7, wherein generating the event analysis includes generating a maintenance event analysis for the blockage based on the video stream from the camera (112, 212).

9. The computing device (102, 402) of claim 8, wherein the processor (440) is configured to transmit the maintenance event analysis to the mobile device (114).

10. The computing device (102, 402) of claim 1, wherein the event analysis includes an image of the area including objects of interest.

11. The computing device (102, 402) of claim 1, wherein the video stream includes a field of view of the area of the facility captured by the camera (112, 212) in a normal operating mode of the camera (112, 212).

12. A method for generating an event analysis, comprising:
detecting, by an event device (108, 208) in an area of a facility, an emergency event in the area, wherein the event device (108, 208) is included in an event detection system (104) in the facility;
receiving, by a remote computing device (102, 402), alarm information about the emergency event from a control panel (106) of the event detection system (104);
receiving, by the remote computing device (102, 402), a video stream from a camera (112, 212) located in the area of the facility;
generating, by the remote computing device (102, 402), an emergency event analysis for the area of the facility based on the alarm information from the control panel (106) and the video stream from the camera (112, 212), wherein the emergency event analysis includes objects of interest in the area and contextual information about the emergency event; and
transmitting, by the remote computing device (102, 402), the event analysis to a mobile device (114).

13. The method of claim 12, wherein the method includes determining, by the camera (112, 212), whether a field of view of the area captured by the camera (112, 212) is blocked.

14. The method of claim 13, wherein the method includes:
transmitting, by the camera (112, 212) in a normal operating mode of the camera (112, 212), the video stream in a default format from the camera (112, 212) to the remote computing device (102, 402) in response to the field of view not being blocked;
changing, by the camera (112, 212), an operating mode of the camera (112, 212) from the normal operating mode to a thermal imaging operating mode in response to the field of view being blocked; and
transmitting, by the camera (112, 212) in the thermal imaging operating mode, the video stream in a thermal imaging format from the camera (112, 212) to the remote computing device (102, 402) in response to the field of view being blocked.

15. The method of claim 12, wherein the method includes:
determining, by the remote computing device (102, 402), the camera (112, 212) from a plurality of cameras (112, 212) based on the camera (112, 212) being in the area using an artificial intelligence (AI) model;
transmitting, by the remote computing device (102, 402), a request to the camera (112, 212) to receive the video stream; and
receiving, by the remote computing device (102, 402), the video stream from the camera (112, 212) responsive to the request.
